# EUROPEAN PATENT SPECIFICATION

(11) **EP 3 689 650 B1**
(45) Date of publication and mention of the grant of the patent: **28.12.2022**
(21) Application number: 20305075.2
(22) Date of filing: 29.01.2020
(51) Int. Cl.: B60H 1/00, H05B 3/00

(54) **AN AIR CONDITIONING SYSTEM FOR A VEHICLE FOR PUBLIC TRANSPORT**
KLIMAANLAGE FÜR EIN FAHRZEUG FÜR DEN ÖFFENTLICHEN VERKEHR
SYSTÈME DE CLIMATISATION POUR UN VÉHICULE DE TRANSPORT EN COMMUN

(30) Priority: 29.01.2019 IT 201900001259
(43) Date of publication of application: 05.08.2020
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- EP-A1- 3 575 700
- JP-A- H07 205 646
- JP-A- 2007 003 170

## Description

### TECHNICAL FIELD

This invention concerns an air conditioning system for a vehicle, in particular an air conditioning system for a vehicle for public transport.

### PRIOR ART

Vehicles for public transport generally comprise an air conditioning system designed to air condition the interior space of the vehicle to be used for public transport.

As is well known, an air conditioning system essentially comprises a circuit in which an operating fluid, for example R134a, R407c, passes from the solid phase to the liquid phase exchanging heat with the environment to be heated. For this purpose, this circuit comprises several elements such as a recirculation pump, a condenser, and an evaporator.

This last element is essentially a heat exchanger configured to allow the passage of the operating fluid from the liquid phase to the solid phase and is essentially made in the form of a metal radiator inside which the fluid passes. The air conditioning system also comprises ventilation means configured to direct an airflow on the radiator to increase the heat exchange of the operating fluid inside the radiator. This fluid then receives heat via the external surfaces of the radiator and is heated by changing phase.

However, especially in winter or under certain climatic conditions, the environment inside the evaporator is humid and cold, so hoarfrost may form on the radiator surfaces that make up the evaporator. This hoarfrost reduces the heat exchange surface of the radiator and will compromise the performance of the air conditioning system. As a result, vehicle consumption is increased.

A number of methods are currently known for reducing hoarfrost formation.

A first method consists either in reversing the airflow generated by the ventilation means or the direction of the flow of the operating fluid in the circuit. However, in one case as in the other, the air conditioning system must be deactivated, making it unusable.

A second method consists in heating the incoming air on the radiator via electrical resistors. However, these resistors consume a lot of energy and, in addition, by heating the air, the efficiency of the air conditioning system is reduced, which consequently increases the vehicles' consumption.

Examples of the above methods are described in documents EP3575700 A1 (Art. 54(3) EPC), JPH07205646 A or JP2007003170 A.

It is therefore clear that there is a need to provide air conditioning systems for vehicles for public transport that are high-performing, can be used continuously, and do not allow frost to form on the heat exchangers of the air conditioning system.

The invention aims to solve the drawbacks mentioned above.

### SUMMARY OF THE INVENTION

The objectives mentioned above are achieved via an air conditioning system according to claim 1, a vehicle according to claim 8 and a defrosting process according to claim 9.

### BRIEF DESCRIPTION OF THE DRAWINGS

Additional characteristics and advantages of the invention will clearly emerge from the description that follows, by way of a non-limiting example only, with reference to the attached drawings, wherein:
- Figure 1 is a schematic, lateral view of an air conditioning system according to the invention;

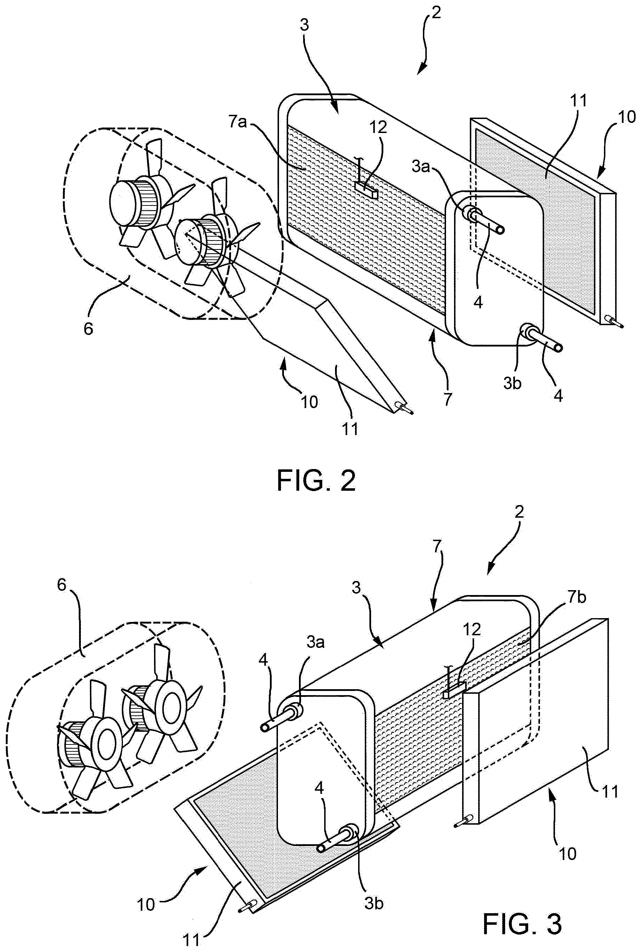

- Figure 2 and Figure 3 are perspective views of the system in Figure 1.

### DETAILED DESCRIPTION OF THE INVENTION

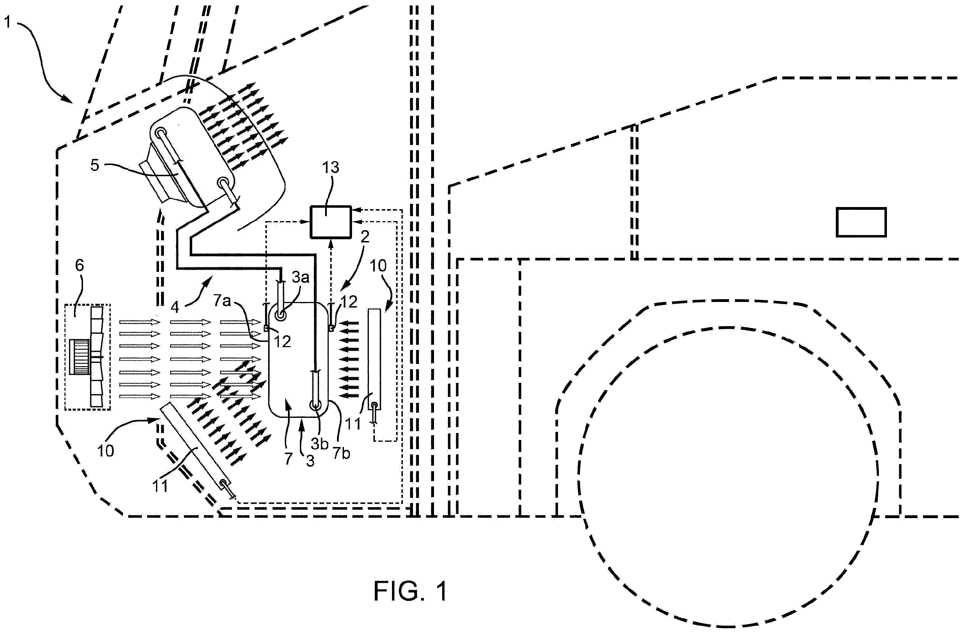

Figure 1 schematically shows the shape of a vehicle for public transport 1 comprising an air conditioning system 2 configured to allow the circulation of air conditioning within a space intended for the vehicle 1 passengers.

In particular, the air conditioning system 2 essentially comprises an evaporator 3 configured to change the phase of an air conditioning fluid and to make it flow in a circuit 4 connected to other elements not shown (e.g. a condenser, a pump, etc.). The air conditioning system 2 also comprises a ventilation sleeve 5 configured to enable the passage of air conditioning inside the vehicle 1. Alternatively, the air conditioning system 2 may comprise a fan heater instead of the ventilation sleeve 5.

In addition, the air conditioning system 2 comprises ventilation means 6 configured to direct an airflow to the evaporator 3 to improve the latter's heat exchange with the environment.

In particular, the evaporator 3 essentially comprises a heat exchanger, for example a radiator 7 with an essentially prismatic shape and equipped with a first opening 3a and a second opening 3b configured to connect the radiator 7 to the air conditioning circuit 4.

In accordance with the prismatic shape described above, the radiator 7 comprises a front wall 7a, a back wall 7b, a pair of side walls, an upper wall, and a lower wall.

The front and back walls 7a, 7b are equipped with openings configured to enable the passage of the airflow generated by the ventilation means 6 through the radiator 7 to increase the heat exchange of the air conditioning fluid with the environment inside the radiator 7.

In particular, the front wall 7a is located opposite the ventilation means 6, while the back wall 7b is opposite this.

According to the invention, the air conditioning system 2 comprises heating means 10 made separately to the radiator 7 and configured to directly heat at least one wall of the latter, for example the back wall 7b, the coldest, of the radiator 7.

In particular, these heating means 10 are electromagnetic heating means, i.e. radiation heating means.

Advantageously, the heating means 10 comprise emitters of electromagnetic radiation 11, preferably infrared radiation, i.e. having a wavelength ranging between 700 nm and 1 mm.

In particular, the emitters 11 are arranged around the radiator 7 so as to emit an electromagnetic radiation that heats a wall of the radiator 7 but without interfering with the flow F generated by the ventilation means 6 on the radiator 7. That is, the emitters 11 are located outside the space occupied by the flow F.

Advantageously, the air conditioning system 2 comprises a first emitter 11 dedicated to the emission towards the front wall 7b of the radiator 7 and a second emitter 11 dedicated to the emission towards the front wall 7a of the radiator 7 and, as mentioned above, located externally with respect to the flow F generated by the ventilation means 6.

Advantageously, the heating means 10 are electrically connected to an energy source of the vehicle 1, e.g. the battery block (not shown) of the vehicle.

The air conditioning system 2 also comprises sensor means 12 configured to detect the presence of hoarfrost on the walls of the radiator 7. In particular, the air conditioning system 2 comprises a first half sensor 12 configured to detect the hoarfrost and/or temperature on one wall 7a and a second half sensor 12 configured to detect the hoarfrost and/or temperature on the other wall 7b. These sensors 12 can be of any known type.

Advantageously, the air conditioning system 2 also comprises an electronic unit 13 electrically connected, with a wired or wireless connection, to sensors 12 and emitters 11 and configured to process the signal of the sensors 12 and command the emitters 11 accordingly. In particular, the electronic unit 13 may be the ECU of the vehicle 1.

Preferably, the electronic unit 13 comprises processing means configured to process the values detected by the sensor means 12 and, accordingly, automatically command the emitters 11 according to the procedure below.

The operation of the air conditioning system 2 according to the invention is the following.

When active, the air conditioning system 2 circulates the fluid of the circuit 4 inside the radiator 7. Here, the fluid is heated by the ambient air that is directed through the ventilation means 6 towards the front wall 7a; as a result, this air passes through the radiator 7 outside the back wall 7b, which is then cooled. The fluid used, heated inside the radiator 7, is directed towards the ventilation sleeve 5 where, through known heat exchangers, it exchanges heat with the air inside the vehicle, heating it. According to the above, the formation of hoarfrost preferably occurs on the back wall 7b, where the air is cooler.

When the sensors 12 detect the presence of hoarfrost (or a predetermined temperature) on the back wall 7b or on the front wall 7a, a resulting signal is detected by the electronic unit 13 that activates the heating means 10.

The latter, in the example described, generate electromagnetic radiation - infra-red in the case described - from the emitters 11, which superficially interacts with the metallic material of the radiator 7 that heats up accordingly.

It should be noted that, for the front wall as for the back wall, the electromagnetic radiation does not interfere with the air and does not decrease the efficiency of the heat exchange. In fact, they only interact with the surface of the walls 7a, 7b, defrosting them.

The invention also concerns a defrosting process of a heat exchanger 7 of an air conditioning circuit 2 of a vehicle 1 essentially comprising the following steps:
- identifying the presence of hoarfrost and/or of a predetermined temperature on at least one of the walls 7a, 7b of the heat exchanger, i.e. the radiator 7;
- activating the heating means 10 configured to directly heat the walls mentioned above.

From the above, the advantages of an air conditioning system 2 according to this invention are clearly evident.

Thanks to the heating means 10, it is possible to directly heat the walls of a heat exchanger, i.e. its external surfaces, without heating the air between the ventilation means 6 and the radiator itself. In this way, deterioration in the efficiency of the heat exchange of the air conditioning fluid in the heat exchanger is prevented, by defrosting the heat exchanger when necessary.

In addition, the heating means 10 do not lose energy to heat this air, avoiding increases in vehicle consumption.

In addition, these heating means 10 are not physically placed in the flow F between the ventilation means 6 and the radiator 7, preventing a decrease of the heat exchange between the air and the radiator 7.

In addition, the use of infrared emitters 11 enables the advantages mentioned above to be obtained economically.

Finally, it is clear that the air conditioning system 2 according to this invention can be subject to modifications and variations that do not, however, deviate from the scope of the protection defined by the claims.

For example, there may be one or more heating means 10, as mentioned, dedicated to the different walls of the evaporator 3.

Again, the arrangement of the air conditioning system 2 may be different, as may the presence of the detection means 12, and, consequently, of the electronic unit 13.

It is also clear that the detection means 12 could be temperature sensors and that the emitters 11 could be used to keep the walls 7a, 7b of the radiator 7 above a predetermined temperature.

Again, the radiation emitted by the emitters 11 may have a different wavelength.

## Claims

1. An air conditioning system (2) for a vehicle (1) for public transport, said air conditioning system (2) comprising a heat exchanger (3) inside which an air conditioning fluid of an air conditioning circuit (4) circulates, configured to exchange heat with the environment, said air conditioning circuit (4) comprising heating means (10) configured to directly heat at least one of the walls (7a, 7b) of said heat exchanger (3), said air conditioning system (2) further comprising ventilation means (6) configured to generate an airflow directed towards at least one of the walls (7a, 7b) of said heat exchanger (3), and being **characterised by**,
said heating means (10) being separated and spaced apart from said heat exchanger (3) and positioned so as not to interfere with said airflow.

2. The air conditioning system according to Claim 1, wherein said heating means (10) are electromagnetic heating means.

3. The air conditioning system according to Claim 1 or Claim 2, wherein said heating means (10) comprise an electromagnetic radiation emitter (11).

4. The air conditioning system according to Claim 3, wherein said electromagnetic radiation has a wavelength of less than 1mm.

5. The air conditioning system according to Claim 3 or Claim 4, wherein said electromagnetic radiation has a wavelength ranging between 700 nm and 1 mm.

6. The system according to one of the preceding Claims, comprising a first heating means (10) for a first wall (7b) of said heat exchanger (7) and a second heating means (10) for a second wall (7a) of said heat exchanger (7).

7. The system according to one of the preceding Claims, comprising sensor means (12) configured to detect the presence of hoarfrost and/or the temperature on at least one of the walls (7a, 7b) of said heat exchanger (3) and an electronic unit (13) electrically connected to said sensor means (12) and to said heating means (10) and configured to control both of the latter based on the signal detected by said sensor means (12).

8. A vehicle for public transport comprising an air conditioning system (2) according to the Claims 1 to 7.

9. A defrosting process of a heat exchanger (3) of an air conditioning circuit (4) of a vehicle (1) via an air conditioning system (2) according to claims 1 to 7 and comprising the steps of:
• identifying the presence of hoarfrost and/or of a pre-set temperature on at least one of the walls (7a, 7b) of said heat exchanger (3); and
• activating heating means (10) configured to directly heat said walls (7a, 7b).

## Patentansprüche

1. Klimasystem (2) für ein Fahrzeug (1) für den öffentlichen Verkehr, wobei das Klimasystem (2) einen Wärmetauscher (3) umfasst, in dem ein Klimafluid eines Klimakreislaufs (4) zirkuliert, der so ausgeführt ist, dass er Wärme mit der Umgebung austauscht, wobei der Klimakreislauf (4) Heizmittel (10) umfasst, die so ausgeführt sind, dass sie mindestens eine der Wände (7a, 7b) des Wärmetauschers (3) direkt erwärmen, wobei das Klimasystem ferner Belüftungsmittel (6) umfasst, die so ausgeführt sind, dass sie einen Luftstrom erzeugen, der auf mindestens eine der Wände (7a, 7b) des Wärmetauschers (3) gerichtet ist, **dadurch gekennzeichnet, dass** die Heizmittel (10) von dem Wärmetauscher (3) getrennt und beabstandet sind und so angeordnet sind, dass sie den Luftstrom nicht beeinträchtigen.

2. Klimasystem nach Anspruch 1, wobei die Heizmittel (10) elektromagnetische Heizmittel sind.

3. Klimasystem nach Anspruch 1 oder Anspruch 2, wobei die Heizmittel (10) einen elektromagnetischen Strahlungsemitter (11) umfassen.

4. Klimasystem nach Anspruch 3, wobei die elektromagnetische Strahlung eine Wellenlänge von weniger als 1 mm hat.

5. Klimasystem nach Anspruch 3 oder Anspruch 4, wobei die elektromagnetische Strahlung eine Wellenlänge zwischen 700 nm und 1 mm aufweist.

6. System nach einem der vorhergehenden Ansprüche, umfassend ein erstes Heizmittel (10) für eine erste Wand (7b) des Wärmetauschers (7) und ein zweites Heizmittel (10) für eine zweite Wand (7a) des Wärmetauschers (7).

7. System nach einem der vorhergehenden Ansprüche, umfassend Sensormittel (12), die so ausgeführt sind, dass sie das Vorhandensein von Raureif und/oder die Temperatur an mindestens einer der Wände (7a, 7b) des Wärmetauschers (3) erfassen, und eine elektronische Einheit (13), die elektrisch mit den Sensormitteln (12) und den Heizmitteln (10) verbunden ist und so ausgeführt ist, dass sie beide Heizmittel (10) auf der Grundlage des von den Sensormitteln (12) erfassten Signals steuert.

8. Fahrzeug für öffentlichen Verkehr mit einem Klimasystem (2) nach einem der Ansprüche 1 bis 7.

9. Enteisungsverfahren eines Wärmetauschers (3) eines Klimakreislaufs (4) eines Fahrzeugs (1) über ein Klimasystem (2) nach einem der Ansprüche 1 bis 7, das die folgenden Schritte umfasst:
- Erkennen des Vorhandenseins von Raureif und/oder einer voreingestellten Temperatur an mindestens einer der Wände (7a, 7b) des Wärmetauschers (3); und
- Aktivieren von Heizmitteln (10), die so ausgeführt sind, dass sie die Wände (7a, 7b) direkt erwärmen.

## Revendications

1. Système de climatisation (2) pour un véhicule (1) de transport en commun, ledit système de climatisation (2) comprenant un échangeur de chaleur (3) à l'intérieur duquel circule un fluide de climatisation d'un circuit de climatisation (4), conçu pour échanger de la chaleur avec l'environnement, ledit circuit de climatisation (4) comprenant un moyen de chauffage (10) conçu pour chauffer directement au moins une des parois (7a, 7b) dudit échangeur de chaleur (3), ledit système de climatisation (2) comprenant en outre un moyen de ventilation (6) conçu pour produire un flux d'air dirigé vers au moins une des parois (7a, 7b) dudit échangeur de chaleur (3), et étant **caractérisé en ce que** ledit moyen de chauffage (10) est séparé et espacé dudit échangeur de chaleur (3) et positionné de manière à ne pas interférer avec ledit flux d'air.

2. Système de climatisation selon la revendication 1, dans lequel ledit moyen de chauffage (10) est un moyen de chauffage électromagnétique.

3. Système de climatisation selon la revendication 1 ou 2, dans lequel ledit moyen de chauffage (10) comprend un émetteur de rayonnement électromagnétique (11).

4. Système de climatisation selon la revendication 3, dans lequel ledit rayonnement électromagnétique présente une longueur d'onde de moins de 1 mm.

5. Système de climatisation selon la revendication 3 ou 4, dans lequel ledit rayonnement électromagnétique présente une longueur d'onde comprise entre 700 nm et 1 mm.

6. Système de climatisation selon l'une des revendications précédentes, comprenant un premier moyen de chauffage (10) pour une première paroi (7b) dudit échangeur de chaleur (7) et un deuxième moyen de chauffage (10) pour une deuxième paroi (7a) dudit échangeur de chaleur (7).

7. Système de climatisation selon l'une des revendications précédentes, comprenant un moyen formant capteur (12) conçu pour détecter la présence de gelée blanche et/ou la température sur au moins une des parois (7a, 7b) dudit échangeur de chaleur (3) et une unité électronique (13) connectée électriquement audit moyen formant capteur (12) et audit moyen de chauffage (10) et conçue pour commander ces derniers sur la base du signal détecté par ledit moyen formant capteur (12).

8. Véhicule de transport en commun comprenant un système de climatisation (2) selon les revendications 1 à 7.

9. Procédé de dégivrage d'un échangeur de chaleur (3) d'un circuit de climatisation (4) d'un véhicule (1) via un système de climatisation (2) selon les revendications 1 à 7 et comprenant les étapes de :
• identification de la présence de gelée blanche et/ou d'une température prédéfinie sur au moins une des parois (7a, 7b) dudit échangeur de chaleur (3) ; et
• activation dudit moyen de chauffage (10) conçu pour chauffer directement lesdites parois (7a, 7b) .
